(19) Europäisches Patentamt / European Patent Office / Office européen des brevets

(11) **EP 4 029 604 B1**

(12) **EUROPÄISCHE PATENTSCHRIFT**

(45) Veröffentlichungstag und Bekanntmachung des Hinweises auf die Patenterteilung:
**10.07.2024  Patentblatt 2024/28**

(21) Anmeldenummer: **21213408.4**

(22) Anmeldetag: **09.12.2021**

(51) Internationale Patentklassifikation (IPC):
**B01J 39/07** (2017.01)     **B01J 39/20** (2006.01)

(52) Gemeinsame Patentklassifikation (CPC):
**B01J 39/07; B01J 39/20**

(54) **KATIONENAUSTAUSCHER AUF ACRYLNITRILBASIS**

ACRYLONITRILE-BASED CATION EXCHANGER

ÉCHANGEUR DE CATIONS À BASE DE NITRILE ACRYLIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.01.2021  EP 21151268**

(43) Veröffentlichungstag der Anmeldung:
**20.07.2022  Patentblatt 2022/29**

(73) Patentinhaber: **LANXESS Deutschland GmbH 50569 Köln (DE)**

(72) Erfinder: **RECKZIEGEL, Aurelia 41540 Dormagen (DE)**

(56) Entgegenhaltungen:
**CN-A- 86 101 585     DE-A1- 102007 009 073**

- **TINGBAO QIAN ET AL: "Studies on the Synthesis and Pore Properties of Macroporous Polyacrylonitrile Resin Crosslinked by Triallyl Isocyanurate", vol. 1, no. 4, 1 January 1988 (1988-01-01), pages 407 - 412, XP055813594, Retrieved from the Internet <URL:https://en.cnki.com.cn/Article_en/CJFDTotal-LJYX198806001.htm> DOI: 10.16026/j.cnki.iea.1988.06.002**
- **EZHOVA N M ET AL: "Porous biosorbents on the basis of methacrylic acid and triallylisocyanurate", RUSSIAN CHEMICAL BULLETIN INTERNATIONAL EDITION SERIYA KHIMICHESKAYA, SPRINGER SCIENCE+BUSINESS MEDIA, INC, vol. 58, no. 8, 6 June 2010 (2010-06-06), pages 1736 - 1740, XP019829682, ISSN: 1573-9171**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft Kationenaustauscher auf Acrylnitrilbasis, ein Verfahren zu deren Herstellung und deren Verwendung zur Entkationisierung und/oder Enthärtung von wässrigen oder organischen Lösungen.

Schwach-saure Kationenaustauscher aus Polyacrylaten sind seit Jahrzehnten bekannt. Zum Beispiel sind schwach-saure Kationenaustauscher auf Basis von Acrylnitril als Monomer und Divinylbenzol und Dithylendiglykoldivinylether als Vernetzermischung aus der EP-A 1110608 bekannt. Die Kationenaustauscher der EP-A 1110608 weisen eine besonders homogene Netzstruktur auf.

Schwach-saure, makroporöse Kationenaustauscher mit gemischten Monomeren, wie insbesondere Acrylsäure und Methylacrylat und Vernetzergemischen aus Divinylbenzol und Triallylisocyanurat sind aus der CN-A 103951780 bekannt. Diese schwach-sauren Kationenaustauscher sollen eine gute thermische Stabilität und eine hohe Weißfärbung aufweisen.

Die CN-A 103964405 beschreibt schwach-saure, makroporöse Kationenaustauscher aus Gemischen von Methylacrylat, Acrylnitril, Vinylphenol und Triallyisocyanurat. Die Kationenaustauscher der CN-A 103964405 sollen eine hohe Austauschkapazität und eine besonders weiße Farbe aufweisen.

Ähnliche Ionenaustauscher aus Methylacrylat, Acrylnitril als Monomeren und Triallyisocyanurat und Divinylbenzol als Vernetzergemische sind aus der CN-A 109485786 bekannt. Die Verwendung eines Vernetzergemisches soll zu einer gleichmäßigeren Vernetzung führen.

Aus der CN-A 86101585 sind Acrylsäure basierte schwach-saure Kationenaustauscher bekannt, die unter Verwendung eines Vernetzergemisches aus Triallylcyanurat und Divinylbenzol hergestellt werden. Die Kationenaustauscher sollen gute mechanische Festigkeit, kein Verklumpen und keine Klebrigkeit aufweisen.

Aus der CN-A 1082945 sind schwach-saure, makroporöse Kationenaustauscher auf Basis von Acrylnitril bekannt. Die CN'945 empfiehlt Vernetzergemische für die Copolymerisation des Acrylnitrils einzusetzen, die u.a. auch Divinylbenzol und Triallylisocyanurat enthalten können. Die gemäß der CN'945 hergestellten Kationenaustauscher sollen sich durch eine gute Austauschkapazität auszeichnen.

Die DE 102007009073 A1 beschreibt Kationenaustauscher bei denen zunächst ein Saatpolymer aus Acrylnitril hergestellt wird, dass dann in einem weiteren Schritt mit Acrylnitril und Divinylbenzol als Vernetzer weiter polymerisiert wird (Beispiel 3). Das Harz wird anschließend alkalisch zum schwach-sauren Kationenaustauscher hydrolysiert.

Die aus dem Stand der Technik bekannten Kationenaustauschern weisen weiterhin den Nachteil auf, dass das durch die Kationenaustauschern gesäuberte Wasser vom Geschmack und Geruch verbessert werden könnte.

Überraschenderweise wurde jetzt ein Kationenaustauscher hergestellt, mit dem die Nachteile des Standes der Technik überwunden werden und mit dem geschmacklich und geruchsmäßig ausgezeichnetes Wasser hergestellt werden kann.

Der Gegenstand der vorliegenden Erfindung ist daher ein Kationenaustauscher mit einer gelförmigen Struktur und einer BET-Oberfläche < 25 m2 /g, der durch Hydrolyse eines Polymers hergestellt auf Basis von 80 bis 95 Gew.% Acrylnitril als Monomer und 5 bis 20 Gew.% Triallylisocyanurat als Vernetzer, wobei die Summe der Gewichtsmengen des Acrylnitrils und des Triallylisocyanurats mindestens 98 Gew. % bezogen auf die Gesamtmenge der eingesetzten Monomeren und Vernetzer beträgt, hergestellt wird.

Bevorzugt wird zur Herstellung des Polymers Acrylnitril in einer Menge von 91 bis 93 Gew. % und Triallylisocyanurat in einer Menge von 7 bis 9 Gew. % eingesetzt, wobei die Summe der Gewichtsmengen des Acrylnitrils und des Triallylisocyanurat mindestens 98 Gew. % bezogen auf die Gesamtmenge der eingesetzten Monomeren und Vernetzer beträgt.

Besonders bevorzugt beträgt die Summe der Gewichtsmengen des Acrylnitrils und des Triallylisocyanurat, vorzugsweise mindestens 99 Gew. %, ganz besonders bevorzugt 100 Gew. % bezogen auf die Gesamtmenge der eingesetzten Monomeren und Vernetzer. Das Polymer kann aus weiteren Monomeren oder/und Vernetzern hergestellt worden sein. Als Monomeren im Sinne der vorliegenden Erfindung werden bevorzugt Acrylsäureester mit verzweigten oder unverzweigten $C_1$-$C_6$-Alkylresten, Styrol, Methylstyrol, Ethylstyrol, Chlorstyrol oder Vinylpyridin eingesetzt.

Als Monomere im Sinne der Erfindung gelten auch multiethylenisch ethylenisch, ungesättigte Monomere, die auch Vernetzer genannt werden. Diese Vernetzer sind bevorzugt Verbindungen der Reihe Butadien, Isopren, Divinylbenzol, Divinyltoluol, Trivinylbenzol, Divinylnaphtalin, Trivinylnaphtalin, Divinylcyclohexan, Trivinylcyclohexan, Triallycyanurat, Triallylamin, 1,7-Octadien, 1,5-Hexadien, Cyclopentadien, Norbornadien, Diethylenglykoldivinylether, Triethylenglykoldivinylether, Tetraethylenglykoldivinylether, Butandioldivinylether, Ethylenglycoldivinylether, Ethylenglycoldimethacrylat, Trimethylolpropantrimethacrylat, Allylmethacrylat, Cyclohexandimethanoldivinylether, Hexandioldivinylether oder Trimethylolpropantrivinylether.

Vorzugsweise werden keine weiteren Monomeren oder/und Vernetzer eingesetzt. Vorzugsweise stammen Monomere oder/und Vernetzer, die zusätzlich zu Acrylnitril und Triallylisocyanurat enthalten sein können, aus Verunreinigungen aus dem eingesetzten Acrylnitril und/oder Triallylisocyanurat. Zusätzliche Monomere oder/und Vernetzer, abgesehen von Acrylnitril und Triallylisocyanurat, können in einer Gewichtsmenge ≤ 2 Gew.%, besonders bevorzugt in einer Gewichtsmenge ≤ 1 Gew.% zur Herstellung des Polymers verwendet werden.

Die Polymere weisen vorzugsweise eine gelförmige Struktur auf. Falls sie eine gelförmige Struktur aufweisen, bedeutet dies, dass sie eine BET-Oberfläche < 25 $m^2$/g aufweisen. Die Polymere haben vorzugsweise einen Durchmesser im Bereich von 100 μm bis 2000 μm.

Das Polymer ist hergestellt auf Basis von 80 bis 95 Gew.% Acrylnitril als Monomer und 5 bis 20 Gew.% Triallylisocyanurat als Vernetzer, wobei die Summe der Gewichtsmengen des Acrylnitrils und des Triallylisocyanurats mindestens 98 Gew. % beträgt, bezogen auf die Gesamtmenge der eingesetzten Monomeren und Vernetzer.

Besonders bevorzugt beträgt die Summe der Gewichtsmengen des Acrylnitrils und des Triallylisocyanurat, vorzugsweise mindestens 99 Gew. %, ganz besonders bevorzugt 100 Gew. % bezogen auf die Gesamtmenge der eingesetzten Monomeren und Vernetzer.Der Kationenaustauscher wird durch Hydrolyse des Polymers, vorzugsweise gemäß Schritt b.) des unten beschriebenen Herstellungsverfahrens, hergestellt.

Der Kationenaustauscher weist eine gelförmige Struktur und eine BET-Oberfläche < 25 $m^2$/g auf.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind.

Von der Erfindung ist ebenfalls ein Verfahren zur Herstellung des Kationenaustauschers umfasst, bei dem

in einem Schritt a.)
80 bis 95 Gew.% Acrylnitril als Monomer und 5 bis 20 Gew.% Triallyisocyanurat als Vernetzer, wobei die Summe der Gewichtsmengen des Acrylnitrils und des Triallylisocyanurats mindestens 98 Gew. % bezogen auf die Gesamtmenge der eingesetzten Monomeren und Vernetzer beträgt,
in Gegenwart mindestens eines Initiators,
gegebenenfalls in Gegenwart mindestens eines Schutzkolloids
in Gegenwart von Wasser polymerisiert wird und
in einem Schritt b.) das Polymerisat aus Schritt a.) in Gegenwart mindestens einer Base oder mindestens einer Säure zum Kationenaustauscher hydrolysiert. wird.

Bevorzugt wird Acrylnitril in einer Menge von 91 bis 93 Gew. % und Triallylisocyanurat in einer Menge von 7 bis 9 Gew. % eingesetzt, wobei die Summe der Gewichtsmengen des Acrylnitrils und des Triallylisocyanurat mindestens 98 Gew. % bezogen auf die Gesamtmenge der eingesetzten Monomeren und Vernetzer beträgt.

Das Polymerisat aus Schritt a.) kann aus weiteren Monomeren oder/und Vernetzern hergestellt worden sein. Als Monomeren im Sinne der vorliegenden Erfindung werden bevorzugt Acrylsäureester mit verzweigten oder unverzweigten $C_1$-$C_6$-Alkylresten, Styrol, Methylstyrol, Ethylstyrol, Chlorstyrol oder Vinylpyridin eingesetzt.

Als Monomeren im Sinne der Erfindung gelten auch multiethylenisch ethylenisch, ungesättigte Monomere, die auch Vernetzer genannt werden. Diese Vernetzer sind bevorzugt Verbindungen der Reihe Butadien, Isopren, Divinylbenzol, Divinyltoluol, Trivinylbenzol, Divinylnaphtalin, Trivinylnaphtalin, Divinylcyclohexan, Trivinylcyclohexan, Triallycyanurat, Triallylamin, 1,7-Octadien, 1,5-Hexadien, Cyclopentadien, Norbornadien, Diethylenglykoldivinylether, Triethylenglykoldivinylether, Tetraethylenglykoldivinylether, Butandioldivinylether, Ethylenglycoldivinylether, Ethylenglycoldimethacrylat, Trimethylolpropantrimethacrylat, Allylmethacrylat, Cyclohexandimethanoldivinylether, Hexandioldivinylether oder Trimethylolpropantrivinylether. Vorzugsweise werden keine weiteren Monomeren oder/und Vernetzer eingesetzt.

Vorzugsweise stammen Monomere oder/und Vernetzer, die zusätzlich zu Acrylnitril und Triallylisocyanurat enthalten sein können, aus Verunreinigungen aus dem eingesetzten Acrylnitril und/oder Triallyisocyanurat. Zusätzliche Monomere oder/und Vernetzer, abgesehen von Acrylnitril und Triallylisocyanurat, können in einer Gewichtsmenge ≤ 2 Gew.%, besonders bevorzugt in einer Gewichtsmenge ≤ 1 Gew.% zur Herstellung des Polymerisates aus Schritt a.) verwendet werden.

Acrylnitril und Triallyisocyanurat und gegebenenfalls weitere Vernetzer und/oder Monomeren, bilden eine organische Phase aus. Diese Phase wird üblicherweise durch Rühren mit der wässrigen Phase vermischt und bildet dann Monomerentröpfchen aus. Die Bildung der Monomerentröpfchen könnte aber beispielsweise auch durch Ultraschallbehandlung erfolgen. Bevorzugt wird die Monomerenmischung zur Tröpfchenbildung gerührt.

Vorzugsweise beträgt das Gewichtsverhältnis von Acrylnitril und Triallylisocyanurat zu der wässrigen Phase 0,5 : 1 bis 1 : 1.

Die organische Phase enthält mindestens einen Initiator oder Mischungen von Initiatoren zur Auslösung der Polymerisation. Für das erfindungsgemäße Verfahren bevorzugt einzusetzende Initiatoren sind Peroxyverbindungen, besonders bevorzugt Peroxyverbindungen der Reihe Dibenzoylperoxid, Dilauroylperoxid, Bis(p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-ethylhexan, sowie Azoverbindungen, bevorzugt 2,2'-Azobis(isobutyronitril) oder 2,2'-Azobis(2-methylisobutyronitril) oder deren Mischungen. Ganz besonders bevorzugt wird Dibenzoylperoxid als Initiator eingesetzt.

Die Initiatoren werden bevorzugt in Mengen von 0,05 bis 2,5 Gew.-%, besonders bevorzugt 0,1 bis 1,5 Gew.-%, bezogen auf die auf die eingesetzte Menge an Acrylnitril, angewendet.

Die in Schritt a.) hergestellten Polymerisate weisen vorzugsweise eine gelförmige Struktur auf. Falls sie eine gelförmige Struktur aufweisen, bedeutet dies, dass sie eine BET-Oberfläche < 25 m$^2$/g aufweisen.

Die in Schritt a.) hergestellten Polymerisate könnten auch eine makroporöse Struktur aufweisen. Zur Erzeugung der makroporösen Struktur wird wenigstens ein Porogen verwendet. Hierfür sind organische Lösungsmittel geeignet, die das entstandene Polymerisat schlecht lösen bzw. quellen. Bevorzugt einzusetzende Porogene sind Verbindungen der Reihe Hexan, Octan, Isooctan, Isododecan, Toluol, Methylethylketon, Dichlorethan, Dichlorpropan, Butanol oder Octanol und deren Isomeren. Es können auch Gemische von Porogenen eingesetzt werden. Bevorzugt wird kein organisches Lösungsmittel in Schritt a.) eingesetzt. Besonders bevorzugt wird kein kein Toluol, insbesondere keine Porogene , in Schritt a.) eingesetzt. In Schritt a.) werden vorzugsweise keine organischen Lösungsmittel eingesetzt.

Zur Erzeugung einer makroporösen Struktur wird das Porogen bzw. Porogengemisch vorzugsweise in Mengen von 5 bis 70 Gew.-%, besonders bevorzugt 10 bis 50 Gew.-%, bezogen auf die Gesamtsumme der Monomeren eingesetzt.

Die aus Schritt a) erhältlichen Polymerisate haben vorzugsweise eine kugelförmige Form und werden auch als Perlpolymerisate bezeichnet.

Vorzugsweise ist die wässrige Phase in Schritt a.) eine Mischung aus mindestens 60 Gew. % Wasser und dem optional einzusetzenden Polymerisationsinhibitor, Schutzkolloiden, die Pufferverbindungen, wie vorzugsweise den Phosphatpuffer und eingesetzte Salze. Die Menge an Wasser bezieht sich auf die Gesamtmenge an Wasser und den optional einzusetzenden Polymerisationsinhibitor, Schutzkolloiden, die Pufferverbindungen, wie vorzugsweise den Phosphatpuffer und die eingesetzten Salze.

Bei der Herstellung der Polymerisate gemäß Schritt a) kann die wässrige Phase in einer bevorzugten Ausführungsform wenigstens einen gelösten Polymerisationsinhibitor enthalten. Als Polymerisationsinhibitoren im Sinne der vorliegenden Erfindung kommen bevorzugt sowohl anorganische als auch organische Stoffe in Frage. Besonders bevorzugte anorganische Polymerisationsinhibitoren sind Stickstoffverbindungen der Reihe Hydroxylamin, Hydrazin, Natriumnitrit oder Kaliumnitrit, Salze der phosphorigen Säure, insbesondere Natriumhydrogenphosphit, sowie schwefelhaltige Verbindungen, insbesondere Natriumdithionit, Natriumthiosulfat, Natriumsulfat, Natriumhydrogensulfit, Natriumrhodanid oder Ammoniumrhodanid. Besonders bevorzugte organische Polymerisationsinhibitoren sind phenolische Verbindungen der Reihe Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere geeignete organische Polymerisationsinhibitoren sind stickstoffhaltige Verbindungen. Hierzu gehören Hydroxylaminderivate bevorzugt der Reihe N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate, bevorzugt N,N-Hydrazinodiessigsäure, Nitrosoverbindungen, bevorzugt N-Nitrosophenylhydroxylamin, N-Nitrosophenylhydroxylamin-Ammoniumsalz oder N-Nitrosophenylhydroxylamin-Aluminiumsalz. Falls ein Polymerisationsinhibitor eingesetzt wird, beträgt die Konzentration des einzusetzenden Polymerisationsinhibitors 5 bis 1000 ppm bezogen auf die wässrige Phase, vorzugsweise 10 bis 500 ppm, besonders bevorzugt 10 bis 250 ppm. Bevorzugt wird kein Polymerisationsinhibitor eingesetzt.

In einer bevorzugten Ausführungsform erfolgt die Polymerisation der Monomertröpfchen in Schritt a.) in Anwesenheit eines oder mehrerer Schutzkolloide in der wässrigen Phase.

Als Schutzkolloide eignen sich natürliche oder synthetische wasserlösliche Polymere, der Reihe Gelatine, Stärke, Polyvinylalkohol, Polyvinylpyrrolidon, Polyacrylsäure, Polymethacrylsäure oder Copolymerisate aus Acrylsäure oder Acrylsäureestern. Erfindungsgemäß bevorzugt ist Gelatine. Erfindungsgemäß ebenfalls bevorzugt sind auch Cellulosederivate, insbesondere Celluloseester oder Celluloseether, ganz besonders bevorzugt Carboxymethylcellulose Methylhydroxyethylcellulose, Methylhydroxypropylcellulose oder Hydroxyethylcellulose.

Die Schutzkolloide können einzeln oder als Mischungen verschiedener Schutzkolloide verwendet werden.

Bevorzugt werden als Schutzkolloide auch Kondensationsprodukte aus aromatischen Sulfonsäuren und Formaldehyd eingesetzt. Ganz besonders bevorzugt wird Naphthalinsulfonsäure-Formaldehyd Kondensat und/oder dessen Na-Salz (vorzugsweise gemäß CAS Nr. 91078-68-1) als Schutzkolloide eingesetzt. Solche Produkte werden auch unter dem Namen Baykanol® von der Firma LANXESS Deutschland GmbH vertrieben. Noch weiter bevorzugt werden als Schutzkolloide Naphthalinsulfonsäure-Formaldehyd Kondensat als Na-Salz (vorzugsweise gemäß CAS Nr. 91078-68-1) und Hydroxyethylcellulose eingesetzt.

Die Einsatzmenge für die Summe der Schutzkolloide beträgt bevorzugt 0,05 bis 1 Gew.-% bezogen auf die wässrige Phase, besonders bevorzugt 0,05 bis 0,5 Gew.-%.

Durch die Verwendung von Schutzkolloiden werden die Monomertröpfchen verkapselt. Die mittlere Teilchengröße der gegebenenfalls verkapselten Monomertröpfchen beträgt 10 bis 1000 $\mu$m, vorzugsweise 100 bis 1000 $\mu$m.

In einer bevorzugten Ausführungsform kann die Polymerisation in Schritt a) auch in Anwesenheit eines Puffersystems durchgeführt werden. Bevorzugt werden Puffersysteme eingesetzt, die den pH-Wert der wässrigen Phase, vorzugsweise bei Beginn der Polymerisation, auf einen Wert zwischen 6 und 14, noch weiter bevorzugt zwischen 8 und 10, halten. Bevorzugt erfolgt die Einstellung durch Zugabe einer Base. Als Basen werden bevorzugt Alkalimetalhydroxide oder Ammoniak eingesetzt. Besonders bevorzugt wird Natriumhydroxid, vorzugsweise in wässriger Lösung eingesetzt. Der pH Bereich wird dann vorzugsweise unter Verwendung von Puffersystemen stabilisiert. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borat in der wässrigen Phase beträgt 0,5 bis 500 mmol/l, vorzugsweise 2,5 bis 100 mmol/l.

In einer weiteren bevorzugten Ausführungsform kann die Polymerisation in Schritt a) auch in Anwesenheit eines Salzes in der wässrigen Phase erfolgen. Dadurch wird die Löslichkeit der organischen Verbindungen im Wasser reduziert. Bevorzugte Salze sind Halogenide, Sulfate oder Phosphate der Alkali- und Erdalkalimetalle. Sie können im Konzentrationsbereich bis zur Sättigung der wässrigen Phase eingesetzt werden. Der optimale Bereich liegt daher für jedes Salz anders und muss ausgetestet werden.

Besonders bevorzugt ist Natriumchlorid. Der bevorzugte Konzentrationsbereich der eingesetzten Salze liegt vorzugsweise bei 10 bis 25 Gewichts-% bezogen auf die wässrige Phase.

Die Rührgeschwindigkeit bei der Polymerisation hat vor allem am Anfang der Polymerisation einen wesentlichen Einfluss auf die Teilchengröße. Grundsätzlich werden bei höheren Rührgeschwindigkeiten kleinere Teilchen erhalten. Durch Anpassung der Rührgeschwindigkeit kann der Fachmann die Teilchengröße der Perlpolymerisate in den gewünschten Bereich steuern. Es können verschiedene Rührertypen eingesetzt werden. Besonders geeignet sind Gitterrührer mit axialer Wirkung. In einem 4 Liter Laborglasreaktor werden typischerweise Rührgeschwindigkeiten von 100 bis 400 Upm (Umdrehungen pro Minute) eingesetzt.

Die Polymerisationstemperatur richtet sich nach der Zerfallstemperatur des eingesetzten Initiators. Sie liegt bevorzugt zwischen 50 bis 180°C, besonders bevorzugt zwischen 55 und 130°C. Die Polymerisation dauert bevorzugt 0,5 bis einige Stunden, besonders bevorzugt 2 bis 20 Stunden, ganz besonders bevorzugt 5 bis 15 Stunden. Es hat sich bewährt, ein Temperaturprogramm anzuwenden, bei dem die Polymerisation bei niedriger Temperatur, vorzugsweise ab 50°C begonnen wird und die Reaktionstemperatur mit fortschreitendem Polymerisationsumsatz gesteigert wird. Besonders bevorzugt wird auf 55 bis 75 °C aufgeheizt und in diesem Temperaturbereich für 2 bis 8 h gerührt. Besonders bevorzugt wird anschließend auf einen Bereich von 85 bis 98 °C aufgeheizt und weitere 1 bis 4 Stunden polymerisiert. Auf diese Weise lässt sich beispielsweise die Forderung nach sicherem Reaktionsverlauf und hohem Polymerisationsumsatz sehr gut erfüllen. In einer bevorzugten Ausführungsform wird nach der Polymerisation das Polymer mit üblichen Methoden, bevorzugt durch Filtrieren, Dekantieren oder Zentrifugation, isoliert und gegebenenfalls gewaschen.

In einer bevorzugten Ausführungsform der Erfindung werden zunächst das Salz, die Schutzkolloide bzw. die Mischungen aus den Schutzkolloiden mit dem Puffer vermischt. Dann wird die organische Phase, vorzugsweise enthaltend Acrylnitril, Triallylisocyanurat und dem Initiator oder dem Initiatorgemisch, hinzugegeben. Der Ansatz wird dann vorzugsweise zwischen 15 min und 1 Stunde gerührt. Dann wird der Ansatz, vorzugsweise innerhalb von 1 bis 2 Stunden, auf vorzugsweise eine Temperatur von 55 °C bis 75°C aufgeheizt. In diesem Temperaturbereich wird die Reaktion für vorzugsweise 3 bis 6 Stunden durchgeführt. Dann wird vorzugsweise innerhalb von 30 min bis 1,5 Stunden auf 85 bis 98 °C aufgeheizt. Die Temperatur wird vorzugsweise für 1 bis 3 Stunden gehalten. Danach kann das Polymer aus Schritt a.) gewaschen und nach den dem Fachmann bekannten Methoden aufgearbeitet und gereinigt werden.

Die nach Schritt a) hergestellten vernetzten Polymerisate auf Basis von Acrylnitril und Triallylisocyanurat werden im Schritt b) durch Umsetzung mit einer Base oder einer Säure hydrolysiert.

Schritt b.) (Hydrolyse)

Als Base werden vorzugsweise wässrige, alkoholische oder wässrig-alkoholische Lösungen von Alkali- und Erdalkalihydroxiden eingesetzt. Bevorzugt werden wässrige Alkalilösungen, wie Kalilauge und insbesondere Natronlauge, verwendet. Die Konzentration der zu verwendenden Alkalilösung beträgt 10 bis 60 Gew.-%, vorzugsweise 20 bis 35 Gew.-%.

Die Menge an Alkalilösung wird so gewählt, dass ein Alkaliüberschuss von 10 bis 500 mol-%, vorzugsweise 100 bis 300 mol-% bezogen auf die Menge der zu hydrolysierenden Nitrilgruppen eingestellt wird.

In Hinblick auf eine sichere und reproduzierbare Reaktionsführung ist es vorteilhaft, eine der Reaktionskomponenten, das Polymerisat aus Schritt a.) oder die Base, bei der Temperatur T1 über einen längeren Zeitraum dosiert zuzugeben. Die Zugabe kann dabei vorzugsweise innerhalb von 1 bis 15 h, besonders bevorzugt innerhalb von 2 bis 10 h erfolgen.

In einer bevorzugten Ausführungsform der vorliegenden Erfindung wird die Base in einem Druckreaktor bei der Temperatur T1 zu einer gerührten wässrigen Suspension des Polymerisats aus Schritt a.) zudosiert. Die Dosierung der Base kann mit konstanter Geschwindigkeit erfolgen. Es hat sich jedoch als besonders günstig erwiesen, die Dosiergeschwindigkeit während der Zugabe zu erhöhen. Auf diese Weise lässt sich eine sehr gleichmäßige Reaktion und Wärmeentwicklung bei hoher Produktivität erreichen. Die Temperatur T1 beträgt vorzugsweise 70 bis 120°C, besonders bevorzugt 80 bis 105°C.

Zur Vervollständigung der Hydrolyse wird die Temperatur des Reaktionsgemisches vorzugsweise auf die Temperatur T2 erhöht. T2 beträgt vorzugsweise 100 bis 180°C und besonders bevorzugt 120 bis 160°C. Die Temperaturerhöhung von T1 auf T2 erfolgt bevorzugt nachdem die Zugabe der Base abgeschlossen ist.

T2 ist vorzugsweise 20 bis 110°C, besonders bevorzugt 30 bis 70°C höher als T1.

Nach der Hydrolyse liegen die Kationenaustauscher aus Schritt b.) in der Salzform vor und können gegebenenfalls umgeladen und gegebenenfalls weiter gereinigt werden.

Schritt b.) (Saure Hydrolyse)

Das Polymerisat aus Schritt a.) wird vorzugsweise durch Umsetzung mit mindestens einer Säure hydrolysiert.

Als Säuren werden vorzugsweise anorganische Säuren, wie vorzugsweise Schwefelsäure, Salzsäure, Salpetersäure oder Flusssäure eingesetzt. Besonders bevorzugt wird Schwefelsäure eingesetzt. Die Säuren werden vorzugsweise in einem Molverhältnis von 0,5 : 1 bis 5 :1, besonders bevorzugt bei 1 : 1 bis 3 : 1 bezogen auf die molare Menge an Nitrilgruppen im Polymeren eingesetzt. Der Polymer wird vorzugsweise mit 50 bis 300 Gew.% Wasser, bezogen auf die Masse an eingesetztem Polymeren versetzt. Vorzugsweise wird dann eine Temperatur T1 von 80 °C bis 130 °C eingestellt. Vorzugsweise erfolgt die Zugabe der Säuren während auf die Temperatur T1 erwärmt wird. Dann wird die Mischung vorzugsweise auf eine Temperatur T2 von 120 °C bis 170 °C erwärmt. Vorzugsweise erfolgt die Hydrolyse bei einem Druck von maximal 5 bar. Die Reaktionszeit liegt vorzugsweise in einem Bereich von 2 bis 20 Stunden, besonders bevorzugt von 3 bis 16 Stunden.

In einer bevorzugten Ausführungsform der Erfindung wird in Schritt b.) zunächst das Polymerisat aus Schritt a.) mit Wasser versetzt. Die Reaktion wird vorzugsweise in einem Autoklaven durchgeführt. Dann erfolgt eine Erwärmung auf die Temperatur T1. Ein Teil der Säure, vorzugsweise 30 bis 80 % bezogen auf die Gesamtmenge der Säure, wird vorzugsweise während der Aufheizphase auf die Temperatur T1, vorzugsweise dosiert, zugegeben. Die Zugabe der Säure erfolgt vorzugsweise innerhalb von 1 bis 2 Stunden.

Anschließend wird der restliche Teil der Säure, vorzugsweise innerhalb von 1 bis 5 Stunden, zugegeben. Danach wird vorzugsweise auf die Temperatur T2 aufgeheizt. Es werden vorzugsweise weitere 0,5 bis 6 Stunden gerührt.

Nach der Hydrolyse liegen die Polymere aus Schritt b.) in der H-Form vor und können gegebenenfalls weiter gereinigt werden. Die Polymere aus Schritt b.) sind Kationenaustauscher.

Vorzugsweise erfolgt Schritt b) durch saure Hydrolyse.

Eine Reinigung erfolgt vorzugsweise mit starken Säuren. Geeignet ist Schwefelsäure mit einer Konzentration von vorzugsweise 1 bis 50 Gew.-%, besonders bevorzugt von 1 bis 20 Gew.-%. Zur weiteren Reinigung können die Kationenaustauscher bei erhöhter Temperatur mit Wasser bzw. Dampf behandelt werden. Feinteilige Bestandteile können anschließend in einer Klassiersäule entfernt werden.

Anwendungen

Die erfindungsgemäßen Kationenaustauscher werden vorzugsweise zur Trinkwasseraufbereitung eingesetzt. Besonders geeignet sind sie zur Entkationisierung und/oder Enthärtung von Trinkwasser, z.B. in Haushaltsfiltern und zur Entkarbonisierung von Trinkwasser sowie Flüssigkeiten, die als Lebensmittel oder bei der Herstellung von Lebensmitteln verwendet werden. Weitere wichtige Anwendungen sind Entkationisierung und/oder Enthärtung von Zuckerlösungen und Lösungen organischer Produkte, vorzugsweise von Rüben-, Rohr- und Stärkezucker, von Glyzerin und/oder Gelatine, die Entsalzung von Wässern bei der Herstellung von ultrareinem Wasser, die Entkarbonisierung von Brauchwasser (im Gleichstromverfahren), in der Verbundschaltung mit einem starksauren Kationenaustauscher zur Entsalzung von Wässern für die industrielle Dampferzeugung, als Pufferfilter hinter Entsalzungsanlagen zur Bindung von Alkalimetallionen, bei der Neutralisation von Regenerierabwässern aus Entsalzungsanlagen, in der Natrium-Form zur Bindung von Schwermetallen, wie vorzugsweise Kupfer, Nickel oder Zink, aus Lösungen bei einem pH-Wert >5 in Abwesenheit von Calcium-Ionen und Komplexbildern.

Insbesondere können die erfindungsgemäßen Kationenaustauscher eingesetzt werden

- zur Entkationisierung und/oder Enthärtung von wässrigen oder organischen Lösungen
- zur Entkationisierung und/oder Enthärtung von Prozess-Strömen in der chemischen Industrie
- zur Entfernung von Schwermetall- und/oder Edelmetallionen aus wässrigen Lösungen.

Schwermetalle oder Edelmetalle im Sinne der vorliegenden Erfindung sind die Elemente des Periodensystems mit den Ordnungszahlen 22 bis 30, 42 bis 50 sowie 74 bis 83.

Weiterhin können die erfindungsgemäßen Kationenaustauscher zur Reinigung von Abwasserströmen verwendet werden. Eine weitere Anwendung der erfindungsgemäßen Kationenaustauscher stellt die Reinigung von Sickerwässern aus Deponien dar.

Die erfindungsgemäßen Kationenaustauscher werden vorzugsweise zur Reinigung von Wasser eingesetzt. Dadurch kann Trinkwasser gewonnen werden, welches sich durch einen besonders unauffälligen bzw. keinen Geruch und einen hohen Geschmack auszeichnet. Zudem wird bei der Herstellung der Ammoniumgehalt im Polymeren aus Schritt b.) deutlich reduziert, so das die Belastung des Abwassers und der Umwelt reduziert wird. Weiterhin kann das Polymer aus Schritt b.) nach dem erfindungsgemäßen Verfahren in höherer Ausbeute produziert werden. Dadurch können die Produktionskosten reduziert werden. Durch das erfindungsgemäße Verfahren werden außerdem die Verklebungen und Anbackungen vom Polymerisat im Reaktor bei der Herstellung deutlich reduziert, wodurch Kosten gespart werden können und der entstehende Abfall reduziert wird.

Methoden

Bestimmung der Menge schwach saure Gruppen nach DIN 54403

50 ml des Austauschers werden auf dem Stampfvolumeter eingerüttelt und anschließend mit vollentsalztem Wasser in eine Glassäule gespült. Anschließend werden 600 mL Natronlauge c(NaOH) 1 mol/L aufgegeben. Dann wird mit 200 mL Ve-Wasser ausgewaschen. Alle Abläufe werden im 1.000 ml-Messkolben vereinigt, mit VE-Wasser bis zur Marke aufgefüllt und gut durchmischt. 50 mL dieser Lösung werden auf ca. 100 ml mit Mischbettwasser verdünnt und mit Salzsäure c(HCl)= 1 mol/L auf dem Metrohm Titrino titriert.

Die Mengen an schwach Saurengruppen errechnet sich nach der Formel

$$TK, H\text{-}Form = 20 \times (0{,}6 - 20 \times ml\ HCl\ /\ 1000)\ eq/L$$

Stickstoffadsorption

Die Stickstoffadsorptionsmessungen erfolgten in flüssigem Stickstoff im Gerät Quadrosorb SI von Quantachrome. Vor der Messung wurden die Proben (Einwaage ca. 100mg) im Vakuum mit 2 K/min bis zur Zieltemperatur (120°C Perlpolymerisat, 50°C funktionalisiertes Perlpolymerisat) aufgeheizt und 12 Stunden bei dieser Temperatur entgast. Zur Berechnung der spezifischen Oberfläche wurde die BET-Methode (Software QuadrWin) genutzt.

**Ammonium im Eluat**

100 mL Ionenaustauscher, abgemessen im 100 mL Messzylinder , werden luftblasenfrei in die Filtersäule überführt. Es werden 1000 mL Calciumchlorid-Lösung überfiltriert und das Eluat im 1 L Messzylinder aufgefangen. Danach wird das Eluat gut gemischt und der pH-Wert bestimmt. Der Ammoniumgehalt im Eluat wird nach Anweisung der Küvetten LCK 304 (Küvetten Test - Ammonium, 0,015-2,0 mg/L $NH_4$-N) gemessen. Dafür lässt man die LCK 304 Küvette erst auf Raumtemperatur erwärmen und pipettiert dann 5 mL des Eluats per Eppendorf hinein. Nach mindestens 15 min Wartezeit kann der Wert gemessen und (angegeben in mg/L) abgelesen werden.

**Beispiele**

**Beispiel 1**

**1.1 Herstellung eines vernetzten Polymerisates**

Wässrige-Phase

| | |
|---|---|
| 215 g | NaCl in |
| 624 ml | Wasser |
| 3,91 g | Dinatriumhydrogenphosphat x 12 $H_2O$ |
| 0,160 g | NaOH (10%) |
| 1,4 g | Hydroxyethylcellulose |
| 143 ml | Wasser |

(fortgesetzt)

Wässrige-Phase

| 3,4 g | Na-Salz von Naphtalinsulfonsäureformaldehyd-Kondensat (95% / Rest Wasser) (CAS Nr. 91078-68-1) in |
| 94 ml | Wasser |

Organische Phase

| 735 g | Acrylnitril (Reinheit > 98 %) |
| 65 g | Triallyisocyanurat (Reinheit > 98 %) |
| 3,2 g | Dibenzoylperoxid |

In einem Polymerisationsgefäß wird die Natriumchlorid-Lösung (215 g NaCL in 624 ml Wasser) mit dem Dinatriumhydrogenphosphat (3,91 g) vorgelegt, die Hydroxyethylcellulose (1,4 g) hinzugegeben und der pH-Wert mit verd. Natronlauge (0,16 g NaOH (10%) ) auf pH 8,5 eingestellt. Die Sulfonsäure-Lösung (Na-Salz von Naphtalinsulfonsäureformaldehyd-Kondensat (95%) (CAS Nr. 91078-68-1) in 94 ml Wasser) wird 15 min gerührt und dann ins Polymerisationsgefäß gegeben. Die komplette wässrige Phase rührt weitere 30 min.

Die organische Phase wird 15 min bei Raumtemperatur gerührt und dann zur wässrigen Phase gegeben und 20 min bei 160 rpm (Umdrehungen pro Minute) bei Raumtemperatur gerührt.

Unter Rühren wird innerhalb von 90 min auf 64°C erwärmt. Die gesamte Reaktionszeit bei 64°C beträgt 4 h 40 min. Anschließend wird innerhalb 1 h auf 90°C erwärmt und 2 h bei dieser Temperatur gehalten. Anschließend wird nicht umgesetztes Acrylnitril durch Reduktion mit 30%iger wässriger Natriumhydrogensulfitlösung entfernt. Danach wird das Harz auf einem 100 $\mu$m-Sieb mit VE-Wasser ausgewaschen.

Ausbeute: 1280 ml Polymerisat, Polymerisationsumsatz: 95,4 %.

Effektive Korngröße (Durchmesser) (DIN 54407 Korngrößenverteilung DE vers. 04 / 2015): 332 $\mu$m,

VE-Wasser steht für vollentsalztes Wasser.

### 1.2 Herstellung des Kationenaustauschers

Das nach 1.1 hergestellte Polymerisat ( 850 mL ) wird mit 850 ml VE-Wasser in einem Autoklaven vorgelegt und binnen 50 min. auf 120 °C erwärmt. Es werden zeitgleich mit dem Aufheizvorgang 736 g 96 Gew.%ige Schwefelsäure (65% von insgesamt 1,3 Äquivalenten $H_2SO_4$ bezüglich 8,74 mol Nitrilgruppen im Polymer, (Kalkulation auf Basis der Menge an Acrylnitril im Polymer)) unter Rühren gleichmäßig zudosiert. Direkt anschließend wird innerhalb von 250 min. 396 g Schwefelsäure bei 120 °C zugegeben. Es wird nach beendeter Zugabe noch 90 min. bei 120 °C nachgerührt.. Anschließend wird innerhalb von 90 min. auf 150 °C erhitzt und weitere 2 h bei 150 °C gerührt. Die Reaktionsmischung wird auf Raumtemperatur abgekühlt und dann der Autoklav entspannt. Der entstehende Druck beträgt maximal 5 bar.

Das Polymerisat wird entnommen, mit VE-Wasser in eine Glasfrittensäule überführt und entwässert. Nun wird mit VE-Wasser gewaschen. Anschließend erfolgt eine Wäsche mit 15 Gew.%iger Schwefelsäure. Danach wird mit VE-Wasser nachgewaschen. Dann wird mit VE-Wasser klassiert zum Ausspülen und Entfernen von Feinkorn.

Ausbeute: 1530 mL Kationenaustauscher

Analytik:

| TK H-Form [mol/l] | 4,7 |
|---|---|
| Geruch (DIN 10955: 2004-06) | 0,5 |
| Geschmack (DIN 10955: 2004-06) | 0 |
| Ammonium im Eluat (mq/l) | 0,219 |

Ein Wert von 0 stellt die beste Kategorie bei der Beurteilung des Geschmacks und des Geruchs des aufgereinigten Wassers dar. Höhere Werte sind schlechter.

## 2. Vergleichsversuch (nicht erfindungsgemäß) unter Verwendung eines

## Vernetzergemisches aus Triallylisocyanurat und Divinylbenzol

### 2.1 Herstellung eines vernetzten Polymerisates

Wässrige-Phase

| | |
|---|---|
| 215 g | NaCl in |
| 624 ml | Wasser |
| 3,91 g | Dinatriumhydrogenphosphat x 12 $H_2O$ |
| 0,160 g | NaOH (10%) |
| 1,4 g | Hydroxyethylcellulose |
| 143 ml | Wasser |
| 3,4 g | Na-Salz von Naphtalinsulfonsäureformaldehyd-Kondensat (95% / Rest Wasser) (CAS Nr. 91078-68-1) in |
| 94 ml | Wasser |

O-Phase

| | |
|---|---|
| 731 g | Acrylnitril |
| 49 g | Triallylisocyanurat |
| 20 g | Divinylbenzol, 80%ig (enthält 20 % Ethylvinylbenzol) |
| 3,2 g | Dibenzoylperoxid |

In einem Polymerisationsgefäß wird die Natriumchlorid-Lösung (215 g NaCL in 624 ml Wasser) mit dem Dinatriumhydrogenphosphat (3,91 g) vorgelegt, die Hydroxyethylcellulose (1,4 g) hinzugegeben und der pH-Wert mit verd. Natronlauge (0,16 g NaOH (10%) ) auf pH 8,5 eingestellt. Die Sulfonsäure-Lösung (Na-Salz von Naphtalinsulfonsäureformaldehyd-Kondensat (95%) (CAS Nr. 91078-68-1) in 94 ml Wasser) wird 15 min gerührt und dann ins Polymerisationsgefäß gegeben. Die komplette wässrige Phase rührt weitere 30 min.

Die organische Phase wird 15 min bei Raumtemperatur gerührt und dann zur wässrigen Phase gegeben und 20 min bei 160 rpm (Umdrehungen pro Minute) bei Raumtemperatur gerührt.

Unter Rühren wird innerhalb von 90 min auf 64°C erwärmt. Die gesamte Reaktionszeit bei 64°C beträgt 4 h 40 min. Anschließend wird innerhalb 1 h auf 90°C erwärmt und 2 h bei dieser Temperatur gehalten. Anschließend kühlt man den Ansatz ab und versetzt ihn mit 350 g einer 30 Gew%igen Natriumhydrogensulfitlösung. Damit wird verbliebenes Acrylnitril - Restmonomer binnen 4 h durch Rühren bei 80 °C vernichtet. Danach wird das Polymerisat auf einem 100 $\mu$m-Sieb mit VE-Wasser ausgewaschen. Das Polymerisat wird auf einem Vibrationstisch zur Volumenbestimmung eingerüttelt.

Ausbeute: 1225 ml Polymerisat, Polymerisationsumsatz: 92 %.

Effektive Korngröße (Durchmesser) (DIN 54407 Korngrößenverteilung DE vers. 04 / 2015): 283 $\mu$m.

### 2.2 Herstellung des Kationenaustauschers

Das nach 2.1 hergestellte Polymerisat ( 700 mL ) wird mit 720 ml VE-Wasser in einem Autoklaven vorgelegt und binnen 50 min. auf 120 °C erwärmt. Es werden zeitgleich mit dem Aufheizvorgang 622 g 96 Gew.%ige Schwefelsäure (65% von insgesamt 1,3 Äquivalenten $H_2SO_4$ bezüglich ca. 7,26 mol Nitrilgruppen im Polymer (Kalkulation auf Basis der Menge an Acrylnitril im Polymer)) unter Rühren gleichmäßig zudosiert. Direkt anschließend wird innerhalb von 250 min. 342 g Schwefelsäure bei 120 °C zugegeben. Es wird nach vollständiger Zugabe noch 90 min. bei 120 °C nachgerührt.. Anschließend wird in 90 min. auf 150 °C erhitzt und weitere 2 h bei 150 °C gerührt. Die Reaktionsmischung wird auf Raumtemperatur abgekühlt und dann der Autoklav entspannt. Der entstehende Druck beträgt maximal 5 bar.

Das Polymerisat wird entnommen, mit VE-Wasser in eine Glasfrittensäule überführt und entwässert. Nun wird mit VE-Wasser gewaschen. Anschließend erfolgt eine Wäsche mit 15 Gew.%iger Schwefelsäure. Danach wird mit VE-Wasser nachgewaschen. Dann wird mit VE-Wasser klassiert zum Ausspülen und Entfernen von Feinkorn.

Ausbeute:    1360 mL Polymerisat

Analytik:

| | |
|---|---|
| TK H-Form [mol/l] | 4,7 |
| Geruch (DIN 10955: 2004-06) | 2 |
| Geschmack (DIN 10955: 2004-06) | 2 |
| Ammonium im Eluat (mg/l) | 0,667 |

**Ergebnis aus Beispiel 1 und dem Vergleichsbeispiel**:

Die aus dem Stand der Technik bekannten Vernetzergemische umfassend Triallylisocyanurat und Divinylbenzol führen also in der Verbindung mit dem Monomeren Acrylnitril zu einem Kationenaustauscher der Wasser nicht zufriedenstellend reinigen kann, da dieses weiterhin einen beeinträchtigten Geschmack und Geruch aufweist (siehe das Vergleichsbeispiel mit Werten von 2, die schlechter sind als im erfindungsgemäßen Beispiel 1). Die erfindungsgemäßen Kationenaustauscher führen hingegen zu einem gereinigten Wasser mit einem besseren Geschmack und Geruch und weisen zudem einen geringeren Ammoniumanteil bei der Herstellung auf. Dadurch wird das Abwasser weniger verunreinigt.

**Patentansprüche**

1.  Kationenaustauscher mit einer gelförmigen Struktur und einer BET-Oberfläche < 25 m$^2$/g, der durch Hydrolyse eines Polymers hergestellt auf Basis von 80 bis 95 Gew.% Acrylnitril als Monomer und 5 bis 20 Gew.% Triallylisocyanurat als Vernetzer, wobei die Summe der Gewichtsmengen des Acrylnitrils und des Triallylisocyanurats mindestens 98 Gew. % bezogen auf die Gesamtmenge der eingesetzten Monomeren und Vernetzer beträgt, hergestellt wird.

2.  Kationenaustauscher gemäß Anspruch 1, **dadurch gekennzeichnet, dass** 91 bis 93 Gew. % Acrylnitril und 7 bis 9 Gew.% Triallyisocyanurat, wobei die Summe der Gewichtsmengen des Acrylnitrils und des Triallylisocyanurats mindestens 98 Gew. % bezogen auf die Gesamtmenge der eingesetzten Monomeren und Vernetzer beträgt, eingesetzt werden.

3.  Kationenaustauscher gemäß einem der Ansprüche 1 oder 2, **dadurch gekennzeichnet, dass** die Summe der Gewichtsmengen des Acrylnitrils und des Triallylisocyanurat vorzugsweise mindestens 99 Gew.%, ganz besonders bevorzugt 100 Gew. % bezogen auf die Gesamtmenge der eingesetzten Monomeren und Vernetzer beträgt.

4.  Verfahren zur Herstellung des Kationenaustauschers mit einer gelförmigen Struktur und einer BET-Oberfläche < 25 m$^2$/g gemäß der Ansprüche 1 bis 3, **dadurch gekennzeichnet, dass** in einem Schritt a.)

    80 bis 95 Gew.% Acrylnitril als Monomer und 5 bis 20 Gew.% Triallyisocyanurat als Vernetzer, wobei die Summe der Gewichtsmengen des Acrylnitrils und des Triallylisocyanurats mindestens 98 Gew.% bezogen auf die Gesamtmenge der eingesetzten Monomeren und Vernetzer beträgt,
    in Gegenwart mindestens eines Initiators,
    gegebenenfalls in Gegenwart mindestens eines Schutzkolloids,
    in Gegenwart von Wasser polymerisiert wird und
    in einem Schritt b.) das Polymerisat aus Schritt a.) in Gegenwart mindestens einer Base oder mindestens einer Säure zum Kationenaustauscher hydrolysiert wird.

5.  Verfahren zur Herstellung des Kationenaustauschers gemäß Anspruch 4, **dadurch gekennzeichnet, dass** als Initiatoren in Schritt a.) Peroxyverbindungen, wie vorzugsweise Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-ethylhexan, sowie Azoverbindungen, wie 2,2'-Azo-bis(isobutyronitril) oder 2,2'-Azobis(2-methylisobutyronitril), eingesetzt werden.

6. Verfahren zur Herstellung des Kationenaustauschers gemäß einem der Ansprüche 4 oder 5, **dadurch gekennzeichnet, dass** als Schutzkolloid in Schritt a.) Gelatine, Stärke, Polyvinylalkohol, Polyvinylpyrrolidon, Polyacrylsäure, Polymethacrylsäure und Copolymerisate aus (Meth)acrylsäure und (Meth)acrylsäureestern, Cellulosederivate, insbesondere Celluloseester und Celluloseether, insbesondere Carboxymethylcellulose, Methylhydroxyethylcellulose, Methylhydroxypropylcellulose, Hydroxyethylcellulose und Naphthalinsulfonsäure-Formaldehyd Kondensat und/oder dessen Na-Salz eingesetzt werden.

7. Verfahren zur Herstellung des Kationenaustauschers gemäß einem oder mehreren der Ansprüche 4 bis 6, **dadurch gekennzeichnet, dass** als Schutzkolloid in Schritt a.) Naphthalinsulfonsäure-Formaldehyd Kondensat und/oder dessen Na-Salz eingesetzt werden.

8. Verfahren zur Herstellung des Kationenaustauschers gemäß einem oder mehreren der Ansprüche 4 bis 7, **dadurch gekennzeichnet, dass** der pH Wert der wässrigen Phase durch Zugabe einer Base auf 8 bis 10 eingestellt wird.

9. Verfahren zur Herstellung des Kationenaustauschers gemäß einem oder mehreren der Ansprüche 4 bis 8, **dadurch gekennzeichnet, dass** das Gewichtsverhältnis von Acrylnitril und Triallylisocyanurat zu der wässrigen Phase 0,5 bis 1,0 beträgt.

10. Verfahren zur Herstellung des Kationenaustauschers gemäß einem oder mehreren der Ansprüche 4 bis 9, **dadurch gekennzeichnet, dass** in Schritt b.) eine saure Hydrolyse durch Zugabe von Schwefelsäure durchgeführt wird.

11. Verfahren zur Herstellung des Kationenaustauschers gemäß einem oder mehreren der Ansprüche 4 bis 10, **dadurch gekennzeichnet, dass** die Säuren in Schritt b.) in einem Molverhältnis von 0,5 : 1 bis 5 :1 bezogen auf die molare Menge an Nitrilgruppen im Polymeren eingesetzt werden.

12. Verwendung der Kationenaustauscher gemäß einem oder mehreren der Ansprüche 1 bis 3 zur Entkationisierung und/oder Enthärtung aus wässrigen oder organischen Lösungen, zur Entkationisierung und/oder Enthärtung aus Prozess-Strömen der chemischen Industrie und zur Entfernung von Schwermetall- und/oder Edelmetallionen aus wässrigen Lösungen.

## Claims

1. Cation exchanger having a gel-like structure and a BET surface area < 25 m$^2$/g produced by hydrolysis of a polymer produced based on 80% to 95% by weight of acrylonitrile as monomer and 5% to 20% by weight of triallyl isocyanurate as crosslinker, wherein the parts by weight of acrylonitrile and triallyl isocyanurate sum to at least 98% by weight based on the total amount of the employed monomers and crosslinkers.

2. Cation exchanger according to Claim 1, **characterized in that** 91% to 93% by weight of acrylonitrile and 7% to 9% by weight of triallyl isocyanurate, wherein the parts by weight of acrylonitrile and triallyl isocyanurate sum to at least 98% by weight based on the total amount of the employed monomers and crosslinkers, are employed.

3. Cation exchanger according to either of Claims 1 and 2, **characterized in that** the parts by weight of acrylonitrile and triallyl isocyanurate preferably sum to at least 99% by weight, very particularly preferably 100% by weight, based on the total amount of the employed monomers and crosslinkers.

4. Process for producing the cation exchanger having a gel-like structure and a BET surface area < 25 m$^2$/g according to Claims 1 to 3, **characterized in that** in a step a.)

   80% to 95% by weight of acrylonitrile as monomer and 5% to 20% by weight of triallyl isocyanurate as crosslinker, wherein the parts by weight of acrylonitrile and triallyl isocyanurate sum to at least 98% by weight based on the total amount of the employed monomers and crosslinkers,
   are polymerized in the presence of water
   in the presence of at least one initiator,
   optionally in the presence of at least one protective colloid,

and

in a step b.) the polymer from step a.) is hydrolysed to afford the cation exchanger in the presence of at least one base or at least one acid.

5. Process for producing the cation exchanger according to Claim 4, **characterized in that** the initiators employed in step a.) are selected from peroxy compounds, such as preferably dibenzoyl peroxide, dilauroyl peroxide, bis(p-chlorobenzoyl) peroxide, dicyclohexyl peroxydicarbonate, tert-butyl peroctoate, tert-butyl peroxy-2-ethylhexanoate, 2,5-bis(2-ethylhexanoylperoxy)-2,5-dimethylhexane or tert-amylperoxy-2-ethylhexane, and also azo compounds such as 2,2'-azobis(isobutyronitrile) or 2,2'-azobis(2-methylisobutyronitrile).

6. Process for producing the cation exchanger according to either of Claims 4 or 5, **characterized in that** the protective colloid employed in step a.) is selected from gelatine, starch, polyvinyl alcohol, polyvinylpyrrolidone, polyacrylic acid, polymethacrylic acid and copolymers of (meth)acrylic acid and (meth)acrylic acid esters, cellulose derivatives, in particular cellulose esters and cellulose ethers, in particular carboxymethylcellulose, methylhydroxyethylcellulose, methylhydroxypropylcellulose, hydroxyethylcellulose and naphthalenesulfonic acid-formaldehyde condensate and/or the Na salt thereof.

7. Process for producing the cation exchanger according to one or more of Claims 4 to 6, **characterized in that** the protective colloid employed in step a.) is naphthalenedisulfonic acid-formaldehyde condensate and/or the Na salt thereof.

8. Process for producing the cation exchanger according to one or more of Claims 4 to 7, **characterized in that** the pH of the aqueous phase is adjusted to 8 to 10 by addition of a base.

9. Process for producing the cation exchanger according to one or more of Claims 4 to 8, **characterized in that** the weight ratio of acrylonitrile and triallyl isocyanurate to the aqueous phase is 0.5 to 1.0.

10. Process for producing the cation exchanger according to one or more of Claims 4 to 9, **characterized in that** in step b.) an acid hydrolysis is performed by addition of sulfuric acid.

11. Process for producing the cation exchanger according to one or more of Claims 4 to 10, **characterized in that** the acids are employed in step b.) in a molar ratio of 0.5:1 to 5:1 based on the molar amount of nitrile groups in the polymer.

12. Use of the cation exchanger according to one or more of Claims 1 to 3 for decationization and/or softening of aqueous or organic solutions, for decationization and/or softening of process streams in the chemical industry and for removal of heavy metal and/or noble metal ions from aqueous solutions.

**Revendications**

1. Échangeur de cations ayant une structure en gel et une aire BET < 25 m$^2$/g, qui est fabriqué par hydrolyse d'un polymère fabriqué sur la base de 80 à 95 % en poids d'acrylonitrile en tant que monomère et de 5 à 20 % en poids d'isocyanurate de triallyle en tant qu'agent de réticulation, la somme des pourcentages en poids de l'acrylonitrile et de l'isocyanurate de triallyle étant d'au moins 98 % en poids par rapport à la quantité totale des monomères et agents de réticulation utilisés.

2. Échangeur de cations selon la revendication 1, **caractérisé en ce qu'**on utilise 91 à 93 % en poids d'acrylonitrile et 7 à 9 % en poids d'isocyanurate de triallyle, la somme des pourcentages en poids de l'acrylonitrile et de l'isocyanurate de triallyle étant d'au moins 98 % en poids par rapport à la quantité totale des monomères et agents de réticulation utilisés.

3. Échangeur de cations selon l'une des revendications 1 ou 2, **caractérisé en ce que** la somme des pourcentages en poids de l'acrylonitrile et de l'isocyanurate de triallyle est de préférence d'au moins 99 % en poids, d'une manière tout particulièrement préférée de 100 % en poids par rapport à la quantité totale des monomères et agents de réticulation utilisés.

4. Procédé de fabrication de l'échangeur de cations ayant une structure en gel et une aire BET < 25 m$^2$/g selon les revendications 1 à 3, **caractérisé en ce que**, dans une étape a)

on polymérise 80 à 95 % en poids d'acrylonitrile en tant que monomère et 5 à 20 % en poids d'isocyanurate de triallyle en tant qu'agent de réticulation, la somme des pourcentages en poids de l'acrylonitrile et de l'isocyanurate de triallyle étant d'au moins 98 % en poids par rapport à la quantité totale des monomères et agents de réticulation utilisés,

en présence d'au moins un amorceur,

éventuellement en présence d'au moins un colloïde protecteur,

en présence d'eau, et

dans une étape b) on hydrolyse le polymérisat de l'étape a) en présence d'au moins une base ou d'au moins un acide pour obtenir l'échangeur de cations.

5. Procédé de fabrication de l'échangeur de cations selon la revendication 4, **caractérisé en ce qu'**on utilise en tant qu'amorceurs dans l'étape a) des composés peroxydes, tels par exemple que le peroxyde de dibenzoyle, le peroxyde de dilauroyle, le peroxyde de bis(p-chlorobenzoyle), le peroxydicarbonate de dicyclohexyle, le peroctanoate de tert-butyle, le peroxy-2-éthyl-hexanoate de tert-butyle, le 2,5-bis(2-éthylhexanoylperoxy)-2,5-diméthylhexane ou le tert-amylperoxy-2-éthylhexane, ainsi que des composés azoïques tels que le 2,2'-azo-bis(isobutyronitrile) ou le 2,2'-azobis(2-méthylisobutyronitrile).

6. Procédé de fabrication de l'échangeur de cations selon l'une des revendications 4 ou 5, **caractérisé en ce qu'**on utilise comme colloïde protecteur dans l'étape a) de la gélatine, de l'amidon, du poly(alcool vinylique), de la polyvinylpyrrolidone, du poly(acide acrylique), du poly(acide méthacrylique) et des copolymères d'acide (méth)acrylique et d'esters de l'acide (méth)acrylique, des dérivés de la cellulose, en particulier des esters de cellulose et des éthers de cellulose, en particulier la carboxyméthylcellulose, la méthylhydroxyéthylcellulose, la méthylhydroxypropylcellulose, l'hydroxyéthylcellulose et le produit de condensation de l'acide naphtalènesulfonique et du formaldéhyde et/ou son sel de Na.

7. Procédé de fabrication de l'échangeur de cations selon l'une des revendications 4 à 6, **caractérisé en ce qu'**on utilise comme colloïde protecteur dans l'étape a) un produit de condensation de l'acide naphtalènesulfonique et du formaldéhyde et/ou son sel de Na.

8. Procédé de fabrication de l'échangeur de cations selon l'une ou plusieurs des revendications 4 à 7, **caractérisé en ce que** le pH de la phase aqueuse est ajusté à 8 à 10 par addition d'une base.

9. Procédé de fabrication de l'échangeur de cations selon l'une ou plusieurs des revendications 4 à 8, **caractérisé en ce que** le rapport en poids de l'acrylonitrile et de l'isocyanurate de triallyle à la phase aqueuse est de 0,5 à 1,0.

10. Procédé de fabrication de l'échangeur de cations selon l'une ou plusieurs des revendications 4 à 9, **caractérisé en ce que** dans l'étape b), on réalise une hydrolyse acide par addition d'acide sulfurique.

11. Procédé de fabrication de l'échangeur de cations selon l'une ou plusieurs des revendications 4 à 10, **caractérisé en ce que** les acides sont utilisés dans l'étape b) selon un rapport en moles de 0,5:1 à 5:1 par rapport à la quantité en moles des groupes nitrile dans le polymère.

12. Utilisation des échangeurs de cations selon l'une ou plusieurs des revendications 1 à 3 pour la décationisation et/ou l'adoucissement de solutions aqueuses ou organiques, pour la décationisation et/ou l'adoucissement des courants de procédé de l'industrie chimique et pour l'élimination des ions de métaux lourds et/ou de métaux nobles dans les solutions aqueuses.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1110608 A
- CN 103951780 A
- CN 103964405 A
- CN 109485786 A
- CN 86101585 A
- CN 1082945 A
- DE 102007009073 A1

**In der Beschreibung aufgeführte Nicht-Patentliteratur**

- *CHEMICAL ABSTRACTS,* 91078-68-1